# FASCICULE DE BREVET EUROPEEN

(11) **EP 1 281 541 B1**
(45) Date de publication et mention de la délivrance du brevet: **07.03.2007**
(21) Numéro de dépôt: 02291954.2
(22) Date de dépôt: 02.08.2002
(51) Int. Cl.: B60G 21/055, B60G 17/015, B62D 6/00

(54) **Système de débrayage d'une barre antiroulis de véhicule automobile**
Kupplungssystem für einen Stabilisatorstab eines Kraftfahrzeugs
Coupling system for a stabilizer bar of a motor vehicle

(30) Priorité: 03.08.2001 FR 0110434
(43) Date de publication de la demande: 05.02.2003
(73) Titulaire: Renault s.a.s., 92100 Boulogne Billancourt (FR)
(72) Inventeur: Francisco, Paulo, 91470 Forges les Bains (FR)

(56) Documents cités:
- EP-A- 1 022 169
- FR-A- 2 142 065
- FR-A- 2 697 474
- GB-A- 1 012 087
- US-A- 2 802 674
- US-A- 4 892 329
- US-A- 5 161 822
- US-A- 5 480 186
- US-A- 5 549 328
- US-A- 5 630 623
- PATENT ABSTRACTS OF JAPAN vol. 012, no. 428 (M-762), 11 novembre 1988 (1988-11-11) & JP 63 162314 A (TOYOTA MOTOR CORP), 5 juillet 1988 (1988-07-05)
- PATENT ABSTRACTS OF JAPAN vol. 013, no. 076 (M-800), 21 février 1989 (1989-02-21) & JP 63 275418 A (TOYOTA MOTOR CORP), 14 novembre 1988 (1988-11-14)

## Description

L'invention propose un système de débrayage d'une barre antiroulis de véhicule automobile.

L'invention propose plus particulièrement un système de débrayage d'une barre antiroulis de véhicule automobile en fonction de l'état du véhicule en utilisation.

En situation de virage, la force centrifuge provoque le basculement du véhicule par rapport à son axe longitudinal. Le basculement dépend de la raideur des amortisseurs, c'est-à-dire que plus des amortisseurs sont raides, plus le basculement est faible.

Ce basculement de roulis du véhicule est de l'ordre de quelques degrés d'angle.

Ainsi, de façon à limiter le basculement du véhicule en situation de virage, et par conséquent améliorer le confort de conduite et la tenue de route du véhicule, il est avantageux qu'il soit équipé d'amortisseurs présentant une raideur élevée.

Cependant, lorsque le véhicule est en ligne droite, des amortisseurs présentant une raideur élevée transmettent de façon importante les vibrations dues au contact des roues sur un sol présentant des irrégularités. Ces vibrations diminuent le confort de conduite du véhicule, ainsi que la tenue de route du véhicule.

Ainsi, une raideur élevée des amortisseurs permet d'améliorer le confort de conduite et la tenue de route lorsque le véhicule est en situation de virage et une raideur plus faible permet d'améliorer le confort de conduite et la tenue de route lorsque le véhicule est en ligne droite.

De façon à améliorer le confort de conduite et la tenue de route, lorsque le véhicule est en situation de virage, il est connu de mettre en oeuvre une barre antiroulis, ou barre de torsion, qui s'étend transversalement au véhicule.

La barre antiroulis est généralement en forme de U et présente une partie centrale d'orientation transversale qui est montée pivotante selon une direction transversale par rapport à la structure du véhicule, et deux leviers dont l'extrémité libre est reliée à la partie mobile des amortisseurs.

Ainsi, lorsque le véhicule bascule autour de sa direction longitudinale, la partie centrale de la barre antiroulis est soumise à de la torsion qui s'oppose au basculement et, par conséquent, limite l'inclinaison en roulis du véhicule.

La barre antiroulis permet d'augmenter la raideur des amortisseurs.

Cependant, lorsque le véhicule est en ligne droite, la barre antiroulis ne permet pas de diminuer la transmission des vibrations entre les roues et l'habitacle du véhicule. Au contraire, elle les augmente car elle transmet vers l'habitacle des vibrations qui seraient diminuées par les amortisseurs.

De façon à améliorer ces solutions, il est connu d'utiliser un système de débrayage de la barre antiroulis en fonction de l'état du véhicule. C'est-à-dire, que lorsque le véhicule est en ligne droite, la barre antiroulis est débrayée, les amortisseurs permettent alors de filtrer et du diminuer les vibrations transmises par les roues. Lorsque le véhicule est dans une situation de virage qui provoque sont basculement, la barre antiroulis est embrayée de façon à limiter l'angle de basculement du véhicule et à améliorer le confort de conduite.

Ainsi, un tel système permet d'obtenir un compromis entre les paramètres de confort et de tenue de route dans le dimensionnement et la mise au point des suspensions du véhicule.

Cependant, il est important de déterminer avec précision et de manière fiable les instants auxquels la barre antiroulis doit être embrayée et débrayée.

Ces instants peuvent être déterminés à partir de la mesure d'accélérations verticale et transversale du véhicule par des capteurs électroniques spécifiques.

Ces dispositifs sont chers, complexes et contraignants pour l'architecture mécanique, électrique et électronique des véhicules. De plus, ils sont fragiles, ce qui diminue la fiabilité de tels dispositifs.

Une autre solution détaillée notamment dans le document EP-A-1.022.169 propose que les extrémités libres des leviers de la barre antiroulis soient reliées à la partie mobile de l'amortisseur correspondant par l'intermédiaire d'un actionneur hydraulique qui est principalement composé d'une enveloppe dans laquelle se déplace en translation un piston définissant deux chambres situées de part et d'autre.

Le piston comporte une vanne qui est mobile entre une première position dans laquelle elle permet au fluide hydraulique de circuler librement entre les deux chambres et une seconde position dans laquelle elle permet au fluide de circuler uniquement selon un sens d'une chambre à l'autre.

Ainsi, lorsque la vanne est dans la première position, la barre antiroulis est débrayée et, lorsque la vanne est dans la seconde position, la barre antiroulis est embrayée et rigidifie la suspension du véhicule.

La vanne est pilotée par une unité de contrôle à partir d'informations telles que la vitesse du véhicule, l'activation des feux indicateurs de changement de direction, de la transmission du véhicule ou de l'angle du volant de direction. Cependant, la détermination de ces informations nécessite des capteurs spécifiques ce qui augmente le coût et la complexité du système de débrayage de la barre antiroulis.

De façon à proposer une solution à ces problèmes, l'invention propose un système de débrayage d'une barre antiroulis de véhicule automobile en fonction de l'état du véhicule, du type qui est piloté par une information représentative de la position angulaire du volant de direction,
caractérisé en ce que ladite information représentative est fournie par un dispositif de direction assistée du véhicule.

Selon d'autres caractéristiques de l'invention :
- le dispositif de direction assistée est de type électrique ;
- le dispositif de direction assistée est de type hydraulique;
- l'information représentative de la position angulaire du volant est la valeur de la pression du liquide d'assistance du dispositif de direction assistée ;
- le système de débrayage de la barre antiroulis comporte un vérin hydraulique à double effet dont les chambres sont alimentées par un second liquide et qui est interposé entre l'une des extrémités libres de la barre antiroulis et la partie d'un amortisseur mobile par rapport à la structure du véhicule, de façon à verrouiller leurs mouvements relatifs lorsque la valeur de la pression du liquide d'assistance est supérieure à une valeur prédéterminée et à déverrouiller leurs mouvements relatifs lorsque la valeur de la pression est inférieure ou égale à la valeur prédéterminée ;
- le vérin de verrouillage est commandé par un distributeur qui forme une boucle hydraulique permettant la libre circulation du second fluide hydraulique et les mouvements des extrémités libres de la barre antiroulis par rapport à la structure du véhicule lorsque la valeur de la pression du liquide d'assistance est inférieure ou égale à la valeur prédéterminée, et qui bloque la circulation du second fluide hydraulique et les mouvements de ladite extrémité libre de la barre antiroulis lorsque la valeur de la pression du liquide d'assistance est supérieure à la valeur prédéterminée ;
- le distributeur comporte un tiroir qui est mobile entre une position de déverrouillage dans laquelle le second fluide circule librement dans la boucle hydraulique et vers laquelle il est rappelé par des moyens élastiques, et au moins une position de verrouillage dans laquelle il bloque la circulation du second fluide hydraulique et vers laquelle il est piloté par le liquide d'assistance lorsque sa valeur est supérieure à la valeur prédéterminée.

D'autres caractéristiques et avantages l'invention apparaîtront à la lecture de la description détaillée qui suit pour la compréhension de laquelle on se reportera aux dessins annexés parmi lesquels :
- la figure 1 représente de façon schématique le train avant d'un véhicule automobile qui est équipé d'une barre antiroulis selon l'état de la technique ;
- la figure 2 représente de façon schématique, en position débrayée, les moyens de pilotage de débrayage de la barre antiroulis réalisés selon les enseignements de l'invention ;
- la figure 3 est une vue similaire à celle représentée à la figure précédente, les moyens de pilotage de débrayage de la barre antiroulis étant dans une seconde position embrayée ;
- la figure 4 représente de façon schématique, en position débrayée, les moyens de pilotage de débrayage de la barre antiroulis réalisés selon une variante de réalisation de l'invention;
- la figure 5 est une vue similaire à celle représentée à la figure précédente, les moyens de pilotage de débrayage de la barre antiroulis étant dans une seconde position embrayée ;

Dans la suite de la description les éléments identiques ou similaires seront représentés par les mêmes chiffres de références.

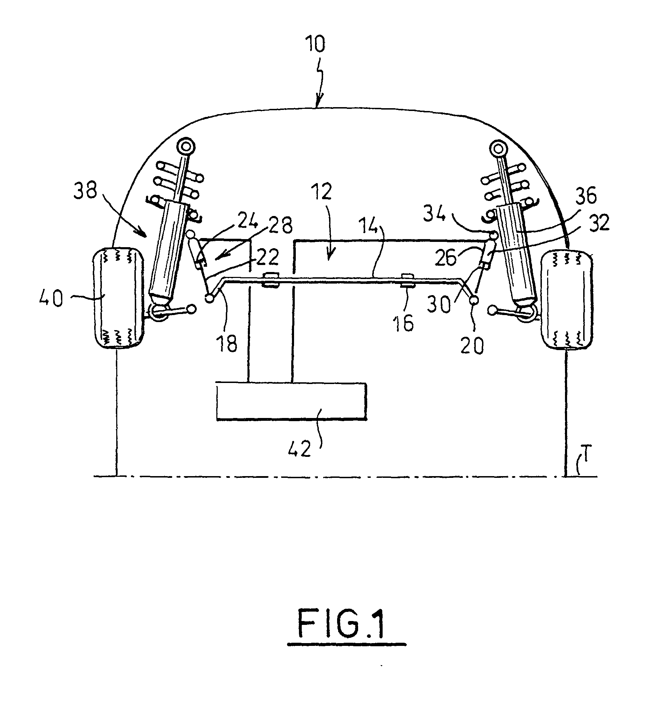

La figure 1 représente de façon schématique le train avant 10 d'un véhicule automobile qui est équipé d'une barre 12 antiroulis selon l'état de la technique.

La barre 12 antiroulis qui est sensiblement en forme de U se compose d'une partie centrale 14 qui est montée pivotante dans des moyens de guidage 16, reliés à la structure du véhicule, selon la direction transversale T du véhicule. La partie centrale 14 comporte à chacune de ses extrémités un levier 18 qui s'étend dans un plan perpendiculaire à la direction transversale de la partie centrale14.

Au repos, la partie centrale 14 ainsi que les deux leviers 18 s'étendent dans un plan qui peut être un plan horizontal.

Les extrémités libres 20 des leviers 18 sont reliées à l'extrémité d'une tige 22 solidaire d'un piston 24 qui est monté en translation dans une enveloppe 26 d'un actionneur hydraulique 28. Le piston 24 définit à l'intérieur de l'enveloppe 26 une chambre de compression supérieure 30 et une chambre de détente inférieure 32.

L'extrémité libre supérieure 34 de l'enveloppe 26 est solidaire de la partie 36 des amortisseurs 38 qui est reliée mécaniquement à la roue 40 et qui est mobile par rapport à la structure du véhicule.

Ainsi, lorsque la partie 36 de chaque amortisseur 38 est reliée de façon rigide à l'extrémité libre du levier 18 correspondant, et que le véhicule bascule selon un axe d'orientation longitudinale, les deux leviers 18 pivotent selon un sens opposé l'un de l'autre, autour de la direction transversale T. Le pivotement crée un moment de torsion dans la partie centrale 14 de la barre 12.

La résistance de la partie centrale 14 s'oppose à ce pivotement et, par conséquent, limite le décalage angulaire des leviers 18 et le basculement du véhicule autour de la direction longitudinale.

Le débrayage de la barre 12 antiroulis consiste à permettre le mouvement des parties 36 des amortisseurs 38 sans provoquer de déformation de la partie centrale 14 de la barre 12.

Pour ce faire, le piston 24 comporte une vanne, non représentée, qui est mobile entre une première et une seconde positions qui permettent ou non le débrayage de la barre 12 antiroulis.

Le fonctionnement des actionneurs hydrauliques 28 est décrit en détail dans le document EP-A-1.022.169.

La détermination des instants de débrayage de la barre 12 antiroulis peut être réalisée par une unité de contrôle 42 à partir d'informations, telles qu'une information représentative de la position angulaire du volant de direction, fournies par des capteurs.

Un tel système de débrayage est compliqué à mettre en oeuvre et nécessite des capteurs spécifiques ce qui augmente son coût et diminue sa fiabilité.

De façon à fournir une solution à ces problèmes, l'invention propose un système de débrayage 50 de la barre 12 antiroulis d'un véhicule automobile en fonction de l'état du véhicule qui est piloté par une information représentative de la position angulaire du volant de direction qui est fournie par un dispositif 54 de direction assistée du véhicule.

Dans la suite de la description et les revendications le dispositif de direction assistée est, à titre d'exemple non limitatif, de type hydraulique. Sans sortir du cadre de l'invention le dispositif de direction assistée peut aussi de façon analogue être de type électrique.

Le dispositif de direction assistée 54 de type hydraulique se compose principalement d'une source 56 de liquide sous pression qui alimente un actionneur 58 de direction assistée par l'intermédiaire d'une valve 60, de type connu, pilotée par le volant de direction 62 du véhicule.

L'actionneur 58 est constitué d'un corps 64 dans lequel un piston 66 délimitant une première et une seconde chambres 68, 70 respectivement est monté mobile en translation transversale. Le piston 66 porte sur chacune de ses parois transversales une tige d'assistance 72 et 74 qui s'étend transversalement à travers les chambres 68 et 70 respectivement.

Le déplacement du piston 66 permet par l'intermédiaire des tiges 72 et 74 d'aider le pivotement des roues, c'est-à-dire de diminuer l'effort que le conducteur doit exercer sur le volant de direction 62 pour les faire pivoter et modifier la direction du véhicule.

Le fonctionnement du dispositif de direction assistée 54 est le suivant. La source 56 fournie un débit constant de liquide d'assistance.

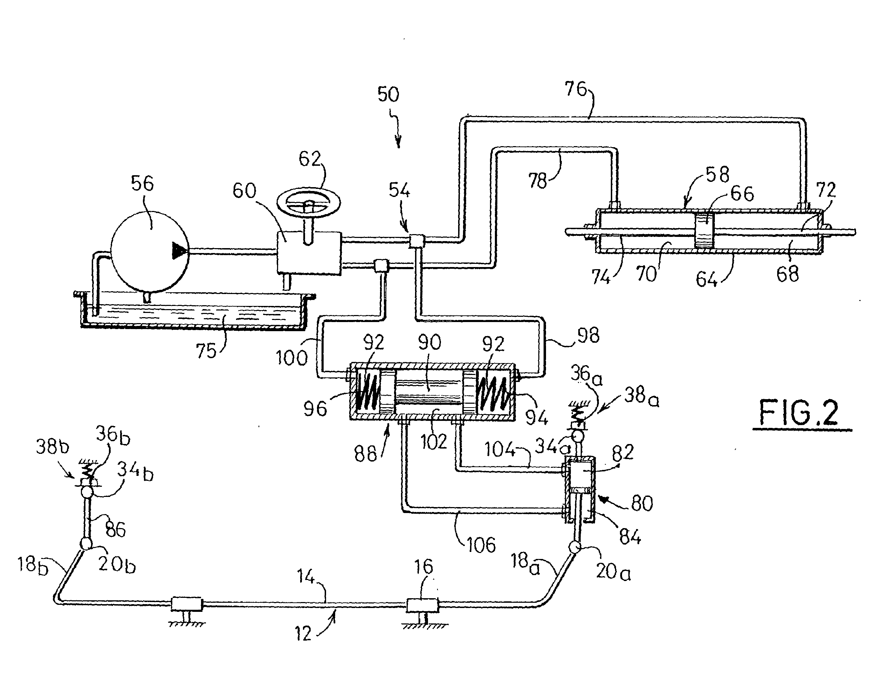

La figure 2 représente le volant de direction 62 dans une première position neutre qui correspond à la position des roues du véhicule lorsqu'il évolue en ligne droite. Dans ce cas, la valve 60 oriente la totalité du flux de liquide d'assistance vers le réservoir alimentation 75 de la pompe 56, c'est-à-dire que le liquide d'assistance circule en circuit fermé entre la pompe 56 et la valve 60 et le réservoir 75.

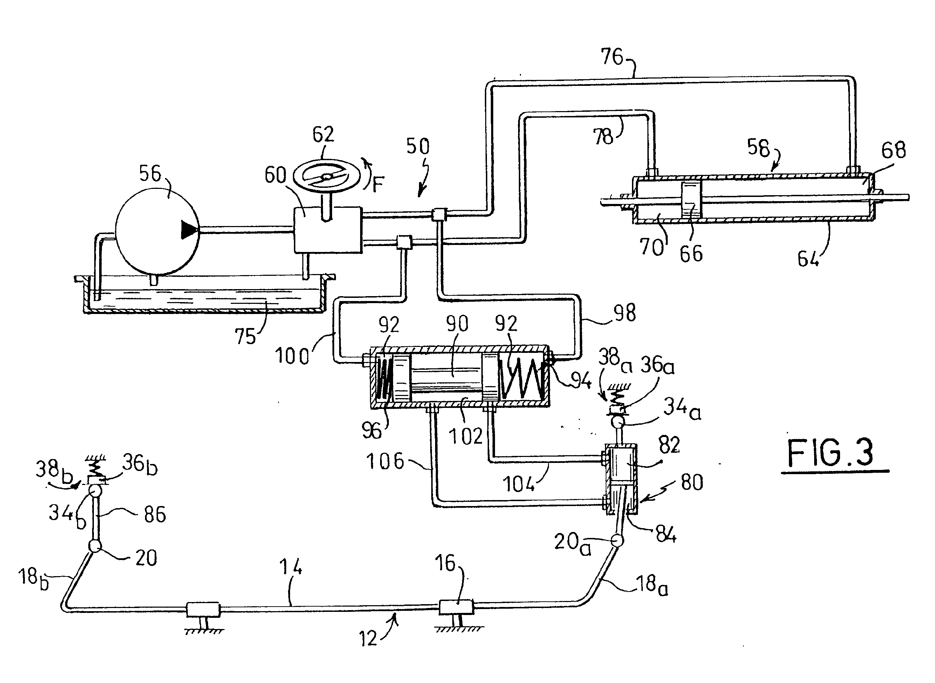

La figure 3 représente, à titre d'exemple non limitatif, le volant de direction 62 tourné, selon la flèche F, dans une autre position qui correspond à une position des roues lorsque le véhicule est en virage, ici le volant est tourné vers la gauche. La valve 60 oriente alors une partie du flux de liquide d'assistance dans un premier conduit 76 d'alimentation de la première chambre 68 de l'actionneur 58.

Le deuxième conduit 78 permet d'évacuer de la seconde chambre 70, par l'intermédiaire de la valve 60, vers le réservoir d'alimentation 75, le liquide d'assistance correspondant au volume introduit dans la première chambre 68.

La partie du flux de liquide d'assistance orienté vers la première chambre 68 dépend avec précision de la position angulaire du volant par rapport à sa première position neutre de façon à aider le pivotement des roues sans influer sur leurs angles de pivotement.

Lorsque le volant 62 retourne en position neutre l'effort de réaction permettant de ramener les roues selon une orientation "droite" par rapport à l'axe longitudinal du véhicule permet aussi de ramener le piston 66 dans sa position médiane dans le corps 64.

Ainsi, lorsque le volant 62 est tourné par rapport à sa position neutre, la pression du fluide d'assistance augmente dans l'un des conduits 76 ou 78 selon le sens dans lequel est tourné le volant 62. Lorsque le volant 62 est tourné vers la gauche, conformément à la figure 3, la pression augmente dans le conduit 76.

Selon l'invention l'information représentative de la position angulaire du volant de direction 62 qui permet de piloter le système de débrayage 50 de la barre 12 antiroulis est la valeur de la pression du liquide d'assistance du dispositif de direction assistée.

Pour ce faire, le système de débrayage 50 comporte un vérin hydraulique 80 à double effet dont les deux chambres supérieure et inférieure 82 et 84 sont alimentées par un second liquide.

Le vérin hydraulique 80 est interposé entre l'extrémité libre 20a d'un levier 18a de la barre 12 antiroulis et la partie 36a de l'amortisseur 38a qui est reliée mécaniquement à la roue correspondante et qui est mobile par rapport à la structure du véhicule.

L'extrémité libre 20b de l'autre levier 18b est ici reliée à la partie mobile 36b de l'amortisseur 38b correspondant par l'intermédiaire d'une bielle rigide 86.

Le vérin hydraulique 80 permet de verrouiller les mouvements relatifs de l'extrémité libre 20a du levier 18a et la partie mobile 36a de l'amortisseur 38a correspondant lorsque la valeur de la pression du liquide d'assistance est supérieure à une valeur prédéterminée et à déverrouiller leurs mouvements relatifs lorsque la valeur de la pression est inférieure ou égale à la valeur prédéterminée.

Le vérin de verrouillage 80 est commandé par un distributeur 88 qui comporte un tiroir 90 mobile entre deux positions extrêmes de verrouillage situées de part et d'autre d'une positon intermédiaire de déverrouillage.

Le tiroir 90 est rappelé vers sa position de déverrouillage par des moyens élastiques qui sont ici des ressorts 92 agencés dans des chambres transversales 94 et 96 situées de part et d'autre du tiroir 90.

Le tiroir est piloté vers ses positions de verrouillage par le fluide d'assistance et plus particulièrement lorsque la valeur de la pression fluide d'assistance est supérieure à une valeur prédéterminée.

Pour ce faire, les chambres transversales 94 et 96 sont reliées au premier et au second conduits 76 et 78 d'alimentation par l'intermédiaire de conduits de pilotage 98 et 100 respectivement.

Lorsque le volant est dans sa position neutre, les pressions dans le premier et le second conduits 76 et 78 sont sensiblement égales, par conséquent le tiroir 90 est dans sa position intermédiaire, conformément à la figure 2.

Dans ce cas, il définit une chambre 102 qui permet de relier entre eux les deux conduits d'alimentation 104 et 106 des chambres supérieure 82 et inférieure 84 respectivement du vérin de verrouillage 80.

Ainsi, le distributeur 88 permet de former une boucle hydraulique qui permet la libre circulation du second fluide hydraulique entre les chambres supérieure 82 et inférieure 84 du vérin de verrouillage 80.

Les mouvements de l'extrémité libre 20a du levier 18a de la barre 12 antiroulis sont libres par rapport à la partie mobile 36a de l'amortisseur 38a correspondant. La barre 12 antiroulis est débrayée, ce qui permet, en ligne droite, d'assurer un confort de conduite et une tenue de route optimums du véhicule.

Lorsque le volant est dans une position tournée par rapport à sa position neutre, par exemple vers la gauche conformément à la figure 3, la pression augmente dans le premier conduit d'alimentation 76, ce qui provoque le déplacement du piston 66 vers la gauche ainsi que le déplacement du tiroir 90. Lorsque la valeur de la pression, dans le conduit d'alimentation 76, est supérieure à une valeur prédéterminée, ce qui correspond aussi à une différence de pression prédéterminée entre le premier et le second conduits 76 et 78, le tiroir 90 est déplacé vers une position extrême de verrouillage, c'est à dire que la chambre 102 ne permet plus la libre circulation entre les chambres supérieure et inférieure 82 et 84 du vérin 80.

Les mouvements de l'extrémité libre 20a du levier 18a de la barre 12 antiroulis sont alors verrouillés par rapport à la partie mobile 36a de l'amortisseur 38a correspondant. La barre 12 antiroulis remplit alors sa fonction de "raidisseur" des amortisseurs. Ce qui permet d'assurer un confort de conduite et une tenue de route optimum en situation de virage.

Ainsi, un tel système de débrayage de la barre 12 antiroulis est piloté de façon simple à partir d'une information existante et qui est disponible sans nécessiter de capteurs supplémentaires. De plus, l'information utilisée est une image conforme aux actions du conducteur. Elle permet d'utiliser les capacités d'anticipation du conducteur en lieu et place d'un dispositif de mesures spécifiques et d'analyse de l'environnement du véhicule.

La valeur prédéterminée de la pression qui détermine les instants de verrouillage et de débrayage de la barre 12 antiroulis dépend directement de la valeur de tarage des ressorts 92.

Cela permet ainsi de filtrer certaines actions sur le volant qui ne sont pas représentatives de la volonté du conducteur du véhicule.

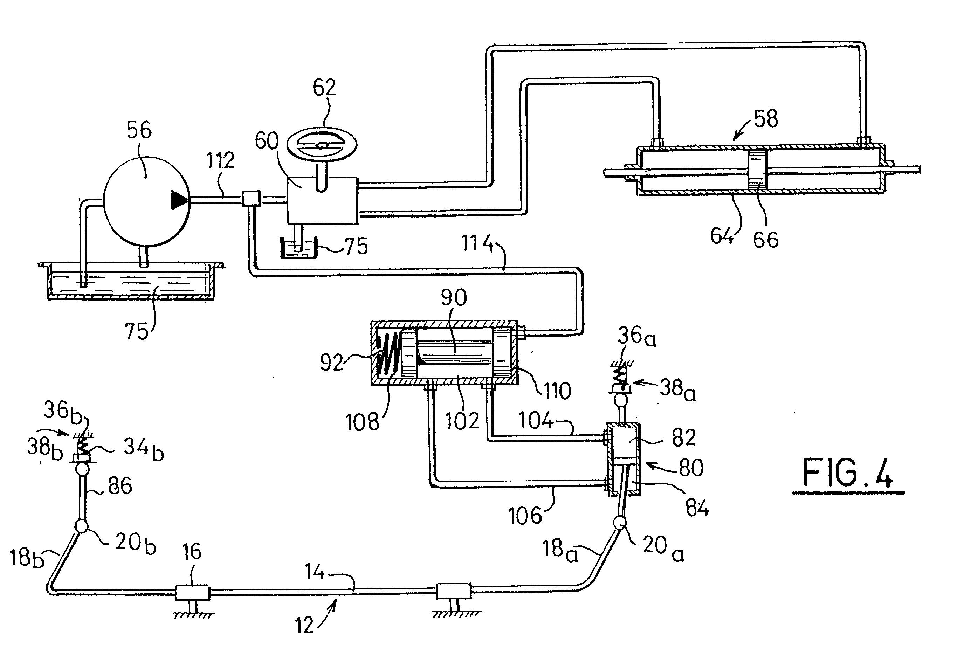

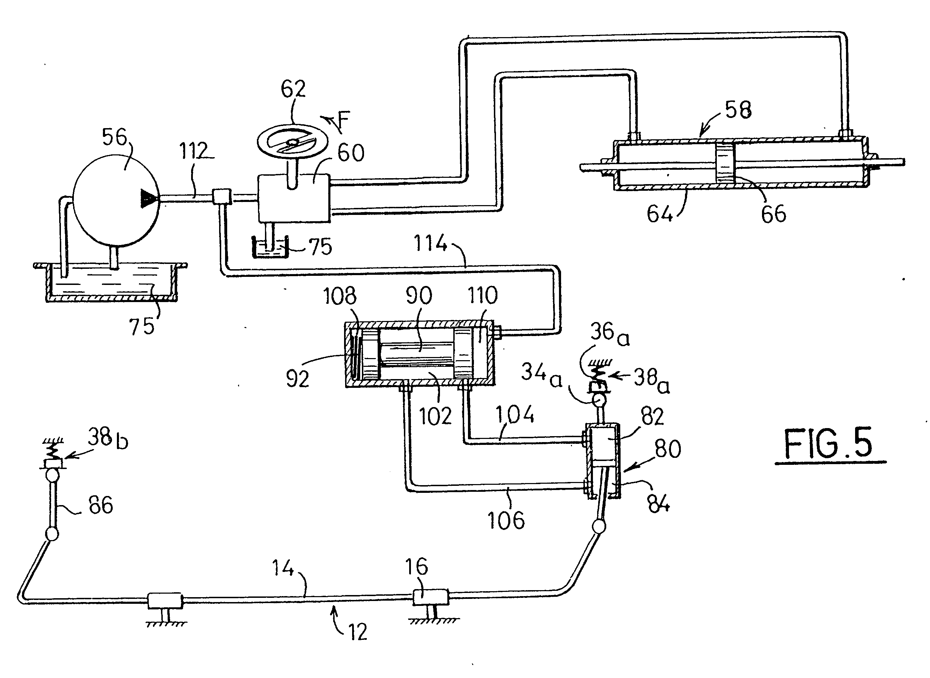

Selon une variante de réalisation de l'invention, le tiroir 90 est mobile entre une positon de déverrouillage représentée à la figure 4 et une position extrême de verrouillage représentée à la figure 5.

Le tiroir 90 est rappelé vers sa position de déverrouillage par un ressort 92 agencé dans une chambre transversale 108 du distributeur 88.

Le tiroir 90 est piloté vers sa position de verrouillage par le fluide d'assistance et plus particulièrement par la valeur de la pression du fluide d'assistance.

Pour ce faire une chambre transversale 110 qui est opposée à la chambre 108, par rapport au tiroir 90, est reliée, par un conduit 114, au conduit 112 de liaison de la source 56 de liquide sous pression et de la valve 60 pilotée.

Lorsque le volant est dans sa position neutre, la pression dans le conduit de liaison 112 est faible puisque le fluide est directement évacué par la valve 60 dans le réservoir 75. Par conséquent, le tiroir 90 est dans sa position de déverrouillage, conformément à la figure 4.

Ainsi, le distributeur 88 permet de former la boucle hydraulique qui permet la libre circulation du second fluide hydraulique entre les chambres supérieure 82 et inférieure 84 vérin hydraulique 80.

Les mouvements de l'extrémité libre 20a du levier 18a de la barre 12 antiroulis sont libres par rapport à la partie mobile 36a de l'amortisseur 38a correspondant. La barre 12 antiroulis est débrayée.

Lorsque le volant est dans une position tournée par rapport à sa position neutre, par exemple vers la gauche conformément à la figure 5, la pression augmente dans le conduit de liaison 112 ce qui provoque, outre le déplacement du piston 66 vers la gauche, le déplacement du tiroir 90. Lorsque la valeur de la pression est supérieure à une valeur prédéterminée (qui peut être différente de la valeur prédéterminée définie dans le mode de réalisation principal), le tiroir 90 est dans sa position extrême de verrouillage, qui ne permet plus la libre circulation entre les chambres supérieures et inférieures 82 et 84 du vérin hydraulique 80.

Les mouvements de l'extrémité libre 20a du levier 18a de la barre 12 antiroulis sont alors verrouillés par rapport à la partie mobile 36a de l'amortisseur 38a correspondant. La barre 12 antiroulis remplit alors sa fonction de "raidisseur" des amortisseurs.

Cette variante de réalisation permet notamment de diminuer le nombre de composants du système de débrayage 50 de la barre 12 antiroulis.

## Revendications

1. Système (50) de débrayage d'une barre (12) antiroulis de véhicule automobile en fonction de l'état du véhicule, du type qui est piloté par une information représentative de la position angulaire du volant de direction (62), et du type dans lequel cette information représentative est la valeur de la pression du liquide d'assistance fournie par un dispositif (54) de direction assistée hydraulique du véhicule,
**caractérisé en ce qu**'il comporte un vérin hydraulique (80) à double effet dont les chambres sont alimentées par un second liquide et qui est interposé entre l'une des extrémités libres (20) de la barre (12) antiroulis et la partie (36) d'un amortisseur (38) mobile par rapport à la structure du véhicule, de façon à verrouiller leurs mouvements relatifs lorsque la valeur de la pression du liquide d'assistance est supérieure à une valeur prédéterminée et à déverrouiller leurs mouvements relatifs lorsque la valeur de la pression est inférieure ou égale à la valeur prédéterminée.

2. Système (50) de débrayage d'une barre (12) antiroulis selon la revendication précédente, **caractérisé en ce que** le vérin (80) de verrouillage est commandé par un distributeur (88) qui forme une boucle hydraulique permettant la libre circulation du second fluide hydraulique et les mouvements des extrémités libres (20) de la barre (12) antiroulis par rapport à la partie mobile (36) de l'amortisseur (38) lorsque la valeur de la pression du liquide d'assistance est inférieure ou égale à la valeur prédéterminée, et qui bloque la circulation du second fluide hydraulique et les mouvements de ladite extrémité libre (20) de la barre (12) antiroulis lorsque la valeur de la pression du liquide d'assistance est supérieure à la valeur prédéterminée.

3. Système (50) de débrayage d'une barre (12) antiroulis selon la revendication précédente, **caractérisé en ce que** le distributeur (88) comporte un tiroir (90) qui est mobile entre une position de déverrouillage dans laquelle le second fluide circule librement dans la boucle hydraulique et vers laquelle il est rappelé par des moyens élastiques (92), et au moins une position de verrouillage dans laquelle il bloque la circulation du second fluide hydraulique et vers laquelle il est piloté par le liquide d'assistance lorsque sa valeur est supérieure à la valeur prédéterminée.

## Claims

1. Coupling system (50) for a stabilizer bar (12) of a motor vehicle which operates according to the state of the vehicle, of the type which is managed by a signal that is representative of the angular position of the steering wheel (62), and of the type in which this representative signal is the pressure value of the power-assistance fluid supplied by a hydraulic power steering device (54) of the vehicle, **characterized in that** it includes a double-acting hydraulic actuator (80) the chambers of which are fed by a second fluid and which is placed between one of the free ends (20) of the stabilizer bar (12) and the portion (36) of a shock absorber (38) which can move in relation to the structure of the vehicle, in such a manner as to lock their relative movements when the pressure value of the power-assistance fluid is more than a preset value and unlock their relative movements when the pressure value is less than or equal to the preset value.

2. Coupling system (50) for a stabilizer bar (12) according to the preceding claim, **characterized in that** the locking actuator (80) is controlled by a distributor (88) which makes a hydraulic loop allowing the free circulation of the second hydraulic fluid and the movements of the free ends (20) of the stabilizer bar (12) in relation to the moving portion (36) of the shock absorber (38) when the pressure value of the power-assistance fluid is less than or equal to the preset value, and which stops the circulation of the second hydraulic fluid and the movements of the said free end (20) of the stabilizer bar (12) when the pressure value of the power-assistance fluid is more than the preset value.

3. Coupling system (50) for a stabilizer bar (12) according to the preceding claim, **characterized in that** the distributor (88) includes a slide valve (90) which can move between an unlocked position in which the second fluid circulates freely in the hydraulic loop and towards which it is returned by elastic means (92), and at least one locked position in which it stops the circulation of the second hydraulic fluid and to which it is driven by the power-assistance fluid when its value is more than the preset value.

## Patentansprüche

1. System (50) zum Auskuppeln eines Querstabilisators (12) eines Kraftfahrzeugs in Abhängigkeit vom Zustand des Fahrzeugs, von der Art, die von einer für die Winkelstellung des Lenkrads (62) repräsentativen Information gesteuert wird, und von der Art, bei der diese repräsentative Information der Wert des Drucks der Servolenkungsflüssigkeit ist, der von einer hydraulischen Servolenkungsvorrichtung (54) des Fahrzeugs geliefert wird,
**dadurch gekennzeichnet, dass** es einen doppeltwirkenden Hydraulikzylinder (80) aufweist, dessen Kammern mit einer zweiten Flüssigkeit gespeist werden und der zwischen einem der freien Enden (20) des Querstabilisators (12) und dem Bereich (36) eines Stoßdämpfers (38) angeordnet ist, der bezüglich der Struktur des Fahrzeugs beweglich ist, um ihre relativen Bewegungen zu verriegeln, wenn der wert des Drucks der Servolenkungsflüssigkeit höher ist als ein vorbestimmter Wert, und um ihre relativen Bewegungen zu entriegeln, wenn der wert des Drucks unter oder gleich dem vorbestimmten Wert ist.

2. System (50) zum Auskuppeln eines Querstabilisators (12) nach dem vorhergehenden Anspruch, **dadurch gekennzeichnet, dass** der Verriegelungszylinder (80) von einem Verteiler (88) gesteuert wird, der eine Hydraulikschleife bildet, die den freien Kreislauf des zweiten Hydraulikfluids und die Bewegungen der freien Enden (20) des Querstabilisators (12) bezüglich des beweglichen Bereichs (36) des Stoßdämpfers (38) erlaubt, wenn der Wert des Drucks der Servolenkungsflüssigkeit geringer als oder gleich dem vorbestimmten Wert ist, und der den Kreislauf des zweiten Hydraulikfluids und die Bewegungen des freien Endes (20) des Querstabilisators (12) blockiert, wenn der Wert des Drucks der Servolenkungsflüssigkeit höher ist als der vorbestimmte Wert.

3. System (50) zum Auskuppeln eines Querstabilisators (12) nach dem vorhergehenden Anspruch, **dadurch gekennzeichnet, dass** der Verteiler (88) einen Schieber (90) aufweist, der zwischen einer Entriegelungsstellung, in der das zweite Fluid frei in der Hydraulikschleife zirkuliert, und in die er durch elastische Mittel (92) zurückgestellt wird, und mindestens einer Verriegelungsstellung beweglich ist, in der er den Kreislauf des zweiten Hydraulikfluids blockiert und in die er von der Servolenkungsflüssigkeit gesteuert wird, wenn ihr Wert höher ist als der vorbestimmte Wert.
